# EUROPEAN PATENT APPLICATION

(11) **EP 4 776 059 A1**
(43) Date of publication of application: **15.07.2026**
(21) Application number: 25190617.8
(22) Date of filing: 21.07.2025
(51) Int. Cl.: G02F 1/13357

(54) **BACKLIGHT MODULE, AUTOMOTIVE DISPLAY AND METHOD FOR MANUFACTURING BACKLIGHT MODULE**

(30) Priority: 14.01.2025 TW 114101555
(71) Applicant: AmTRAN Technology Co., Ltd., New Taipei City 23553 (TW)
(72) Inventor: WANG, Ting Chuen, 23553 New Taipei City (TW)
(74) Representative: Torggler & Hofmann Patentanwälte - Innsbruck

(57) **Abstract**

A backlight module of a display device includes a back plate, a light board and a cavity reflector. The back plate has some first holes. The light board has some second holes correspondingly aligned with the first holes. The cavity reflector is disposed on a side of the light board away from the back plate. The cavity reflector includes a first plate and some fasteners. The light board is at least partially sandwiched between the first plate and the back plate. The fasteners are distributed on the first plate. Each of the fasteners includes a head and a shaft. The head abuts a side of the back plate away from the first plate. The shaft is connected between the first plate and the head. The shaft penetrates through a corresponding one of the first holes and a corresponding one of the second holes.

## Description

### BACKGROUND

### Technical Field

The present disclosure relates to backlight modules and automotive displays equipped with these backlight modules. In addition, the present disclosure relates to manufacturing methods of these backlight modules.

### Description of Related Art

With the rapid advancement of electronic technology, the development of electronic products has been progressing at an astonishing pace. Correspondingly, the demand for electronic products has been increasing day by day. In response to the vast market for electronic products, major manufacturers are working hard to improve these products in order to enhance their brand competitiveness.

However, aside from enhancing the functionality and efficiency of electronic products, effectively improving the user quality of these products at a low cost is undoubtedly another important issue that the industry is paying great attention to.

### SUMMARY

One objective of the present disclosure is to provide a backlight module, which can effectively avoid the occurrence of partial detachment or displacement between the cavity reflector and the light board, such that the performance and reliability of the backlight module can be maintained.

According to an embodiment of the present disclosure, a backlight module of a display device includes a back plate, a light board and a cavity reflector. The back plate has a plurality of first through holes. The light board has a plurality of second through holes correspondingly aligned with the first through holes. The cavity reflector is disposed on a side of the light board away from the back plate. The cavity reflector includes a first plate and a plurality of fasteners. The light board is at least partially clamped by the first plate and the back plate. The fasteners are arranged on the first plate. Each of the fasteners includes a head and a shaft. The head abuts a side of the back plate away from the first plate. The shaft is connected between the first plate and the head. The shaft extends through a corresponding one of the first through holes and a corresponding one of the second through holes.

In one or more embodiments of the present disclosure, the fasteners are hot-melt adhesive shafts.

In one or more embodiments of the present disclosure, the light board includes a second plate and a plurality of light sources. The second plate has a plurality of second through holes. The light sources are disposed on the second plate. The second plate is disposed between the first plate and the back plate. The first plate has a plurality of third through holes. The light sources are respectively located in the third through holes.

In one or more embodiments of the present disclosure, the first plate includes a plurality of walls and a plurality of connecting portions. The walls respectively extend along an extension direction. Each third through hole is defined between adjacent two of the walls along an alignment direction. The extension direction is orthogonal to the alignment direction. Each of the walls includes a bottom surface, a top surface, at least one vertical surface, at least one first inclined surface, at least one horizontal surface and at least one second inclined surface. The bottom surface abuts against the second plate. The top surface is away from the second plate and parallel with the bottom surface. The vertical surface is vertically connected with the bottom surface. The first inclined surface is connected with the vertical surface and inclined at a first angle relative to the bottom surface. A range of the first angle is between 60 degrees and 70 degrees. The horizontal surface is connected with the first inclined surface and parallel with the bottom surface. The second inclined surface is connected between the horizontal surface and the top surface. The second inclined surface is inclined at a second angle relative to the bottom surface. A range of the second angle is between 75 degrees and 85 degrees. Each of the connecting portions is connected between adjacent two of the walls along the extension direction, and connected between adjacent two of the walls along the alignment direction.

In one or more embodiments of the present disclosure, the second plate and the back plate collectively define a first thickness. The shaft has a length. The length is equal to the first thickness.

In one or more embodiments of the present disclosure, the backlight module further includes a thermal pad. The thermal pad is disposed between the second plate and the back plate. The thermal pad has a plurality of fourth through holes aligned with the first through holes and the second through holes.

In one or more embodiments of the present disclosure, the second plate, the thermal pad and the back plate collectively define a second thickness. The shaft has a length. The length is equal to the second thickness.

One objective of the present disclosure is to provide an automotive display, which can effectively avoid the condition of any partial detachment or displacement occurred between the cavity reflector and the light board, such that the performance and reliability of the automotive display can be maintained.

According to an embodiment of the present disclosure, an automotive display includes a display panel, the aforementioned backlight module, at least one optical film and a frame. The backlight module is disposed under the display panel to provide a backlight source to the display panel. The optical film is disposed on a side of the cavity reflector away from the light board. The frame is connected with the back plate and surrounds the optical film, the cavity reflector and the light board.

One objective of the present disclosure is to provide a method for manufacturing a backlight module, which can effectively avoid the condition of any partial detachment or displacement occurred between the cavity reflector and the light board, such that the performance and reliability of the backlight module can be maintained.

According to an embodiment of the present disclosure, a method for manufacturing a backlight module includes: providing a cavity reflector, a light board and a back plate in which the back plate has a plurality of first through holes, the light board has a plurality of second through holes, and the cavity reflector has a plurality of deformable shafts; disposing the light board on the back plate and correspondingly aligning the second through holes with the first through holes; disposing the cavity reflector on the light board and inserting the deformable shafts into the first through holes and the second through holes, such that the light board is at least partially sandwiched between the cavity reflector and the back plate, and the deformable shafts protrude the first through holes and are exposed from a side of the back plate away from the cavity reflector; and performing a shaping process on the deformable shafts exposed from the side of the back plate away from the cavity reflector, such that protruding portions of the deformable shafts exposed from the back plate are formed into heads, a radial dimension of the heads is greater than a diameter of the through holes, and the heads abut against the side of the back plate away from the cavity reflector.

In one or more embodiments of the present disclosure, the shaping process includes: providing a fixture having a heating cap; and placing the heating cap to cover the protruding portions of the deformable shafts exposed from the back plate, and heating the heating cap to form the protruding portions of the deformable shafts exposed from the back plate into the heads.

The above-mentioned embodiments of the present disclosure have at least the following advantages: since the fasteners of the cavity reflector are distributed on the first plate, the fasteners and the first plate can provide clamping forces to the light board and the back plate at different positions. Therefore, the condition of any partial detachment or displacement occurred between the cavity reflector and the light board can be effectively avoided. Thus, the issue of abnormal noise caused by collisions between the cavity reflector and the light board due to any partial detachment or displacement while the vehicle is moving, can be mitigated. Hence, the performance and reliability of the backlight module can be maintained.

### BRIEF DESCRIPTION OF THE DRAWINGS

The disclosure can be more fully understood by reading the following detailed description of the embodiments, with reference made to the accompanying drawings as follows:
Fig. 1 is a side view of a display device according to an embodiment of the present disclosure;
Fig. 2 is a perspective view of the backlight module of Fig. 1 according to an embodiment of the present disclosure;
Fig. 3 is an exploded view of the backlight module of Fig. 2;
Fig. 4 is a perspective view of the cavity reflector according to another embodiment of the present disclosure, in which the deformable shaft is not yet heat-melted;
Fig. 5 is a schematic view of assembly of the cavity reflector of Fig. 4;
Figs. 6a-6c are schematic views showing the heat-melting process of the deformable shaft of Fig. 4;
Fig. 7 is a sectional view along the sectional line A-A of Fig. 5;
Fig. 8 is a partial cross-sectional view of a backlight module according to another embodiment of the present disclosure;
Fig. 9 is a flow chart of a method for manufacturing backlight module according to an embodiment of the present disclosure; and
Fig. 10 is a flow chart of the shaping process of Fig. 9.

### DETAILED DESCRIPTION

Drawings will be used below to disclose embodiments of the present disclosure. For the sake of clear illustration, many practical details will be explained together in the description below. However, it is appreciated that the practical details should not be used to limit the claimed scope. In other words, in some embodiments of the present disclosure, the practical details are not essential. Moreover, for the sake of drawing simplification, some customary structures and elements in the drawings will be schematically shown in a simplified way. Wherever possible, the same reference numbers are used in the drawings and the description to refer to the same or like parts.

Unless otherwise defined, all terms (including technical and scientific terms) used herein have the same meanings as commonly understood by one of ordinary skill in the art to which this disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

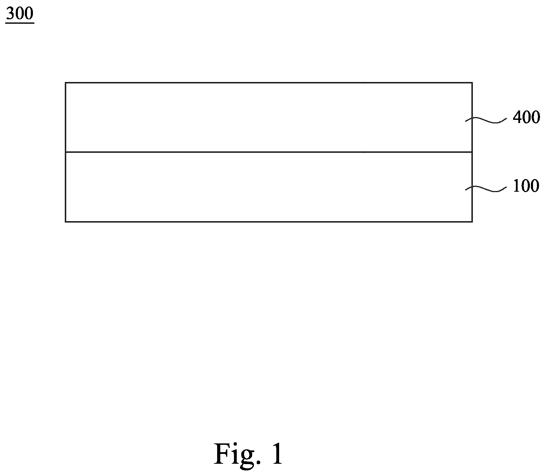

Reference is made to Fig. 1. Fig. 1 is a side view of a display device 300 according to an embodiment of the present disclosure. As shown in Fig. 1, the display device 300 in this embodiment can be, for example, an automotive display. The display device 300 includes a display panel 400 and a backlight module 100. The backlight module 100 is disposed under the display panel 400 to provide a backlight source to the display panel 400.

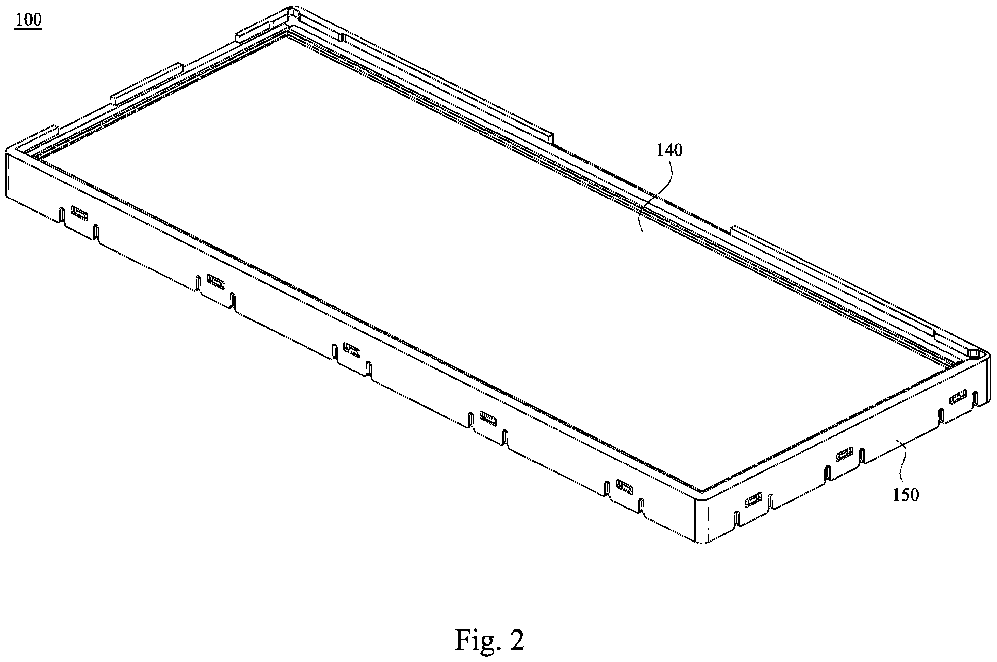

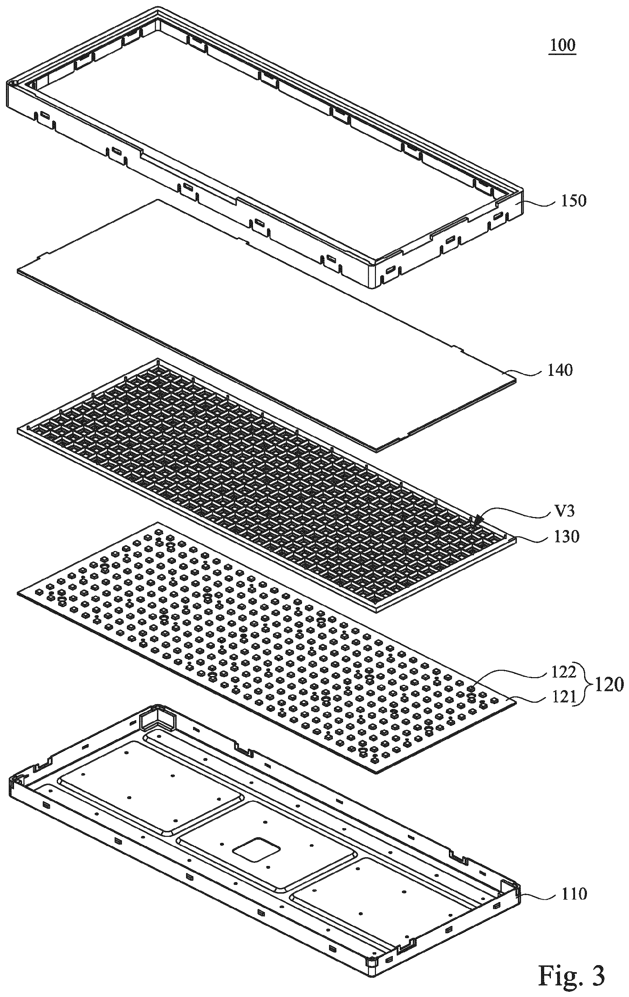

Reference is made to Figs. 2-3. Fig. 2 is a perspective view of the backlight module 100 of Fig. 1 according to an embodiment of the present disclosure. Fig. 3 is an exploded view of the backlight module 100 of Fig. 2. In this embodiment, as shown in Figs. 2-3, the backlight module 100 includes a back plate 110, a light board 120, a cavity reflector 130, an optical film 140 and a frame 150. The light board 120 includes a second plate 121 and a plurality of light sources 122. The light sources 122 are disposed on the second plate 121. In some embodiments, each of the light sources 122 is a Micro LED. The cavity reflector 130 is disposed on a side of the second plate 121 away from the back plate 110. The cavity reflector 130 has a plurality of third through holes V3. The light sources 122 are respectively located in the third through holes V3. The optical film 140 is disposed on a side of the cavity reflector 130 away from the light board 120. The frame 150 is coupled to the back plate 110 and surrounds the optical film 140, the cavity reflector 130 and the light board 120.

In one embodiment, the backlight module 100 further includes a double-sided tape (not shown). The double-sided tape is adhered between the second plate 121 of the light board 120 and the cavity reflector 130, in order to fix the relative position between the second plate 121 and the cavity reflector 130, so as to reduce the chance of the cavity reflector 130 from being partially detached from or displaced relative to the second plate 121. If the cavity reflector 130 and the second plate 121 cannot be fixed relative to each other, any partial detachment or displacement which may occur therebetween may cause the cavity reflector 130 and the second plate 121 to collide with each other when the vehicle is moving, thereby causing the issue of abnormal noise.

In another embodiment, the frame 150 at least partially abuts against a peripheral region of the cavity reflector 130 at a side opposite to the back plate 110, in order to securely press the cavity reflector 130 and the light board 120 together, so as to secure the overall structure of the backlight module 100.

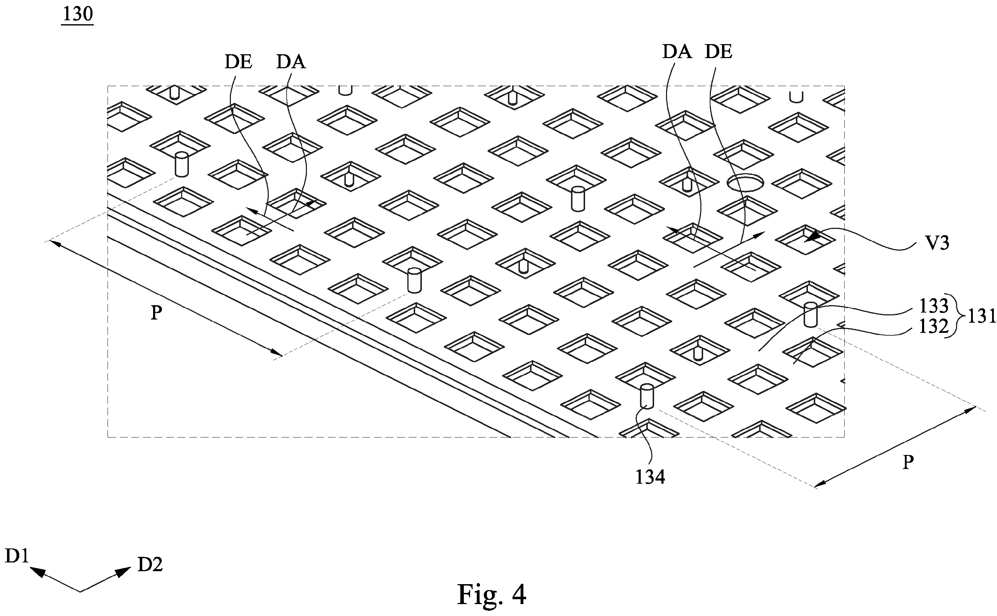

Reference is made to Fig. 4. Fig. 4 is a perspective view of the cavity reflector 130 according to another embodiment of the present disclosure, in which the deformable shaft 134 is not yet heat-melted. The side of the cavity reflector 130 shown in Fig. 4 is configured to face the light board 120. In this embodiment, the cavity reflector 130 includes a first plate 131 and a plurality of deformable shafts 134. The deformable shafts 134 are arranged on the first plate 131. Depending on the actual situations, the cavity reflector 130 can be an integrally formed structure, which means the first plate 131 and the deformable shafts 134 are integrally formed.

To be specific, as shown in Fig. 4, the first plate 131 of the cavity reflector 130 has the third through holes V3. At least two of the third through holes V3 are arranged along a first direction D1, and at least two of the third through holes V3 are arranged along a second direction D2. The first direction D1 and the second direction D2 are orthogonal to each other. Moreover, the deformable shafts 134 are arranged on the first plate 131 along the first direction D1 and the second direction D2. Any two adjacent deformable shafts 134 along one of the first direction D1 and the second direction D2 have a spacing P therebetween. In this embodiment, the spacing P is less than or equal to 40 mm.

In addition, as shown in Fig. 4, the first plate 131 of the cavity reflector 130 includes a plurality of walls 132 and a plurality of connecting portions 133. The walls 132 respectively extend along an extension direction DE. Each third through hole V3 is defined between two adjacent walls 132 along an alignment direction DA. The extension direction DE is orthogonal to the alignment direction DA. Since the walls 132 respectively extend longitudinally or transversely in a relative manner, the extension direction DE of a given wall 132 is the same as the alignment direction DA of other walls 132, while the extension direction DE and the alignment direction DA can respectively correspond with one of the first direction D1 and the second direction D2. Each of the connecting portions 133 is connected between any two adjacent walls 132 along the extension direction DE, and also connected between adjacent two of the walls 132 along the alignment direction DA. In this embodiment, the deformable shafts 134 are respectively connected with one of the connecting portions 133. However, in other embodiments, depending on the actual situations, at least one of the deformable shafts 134 can be spaced apart from the connecting portions 133 and coupled with one of the walls 132.

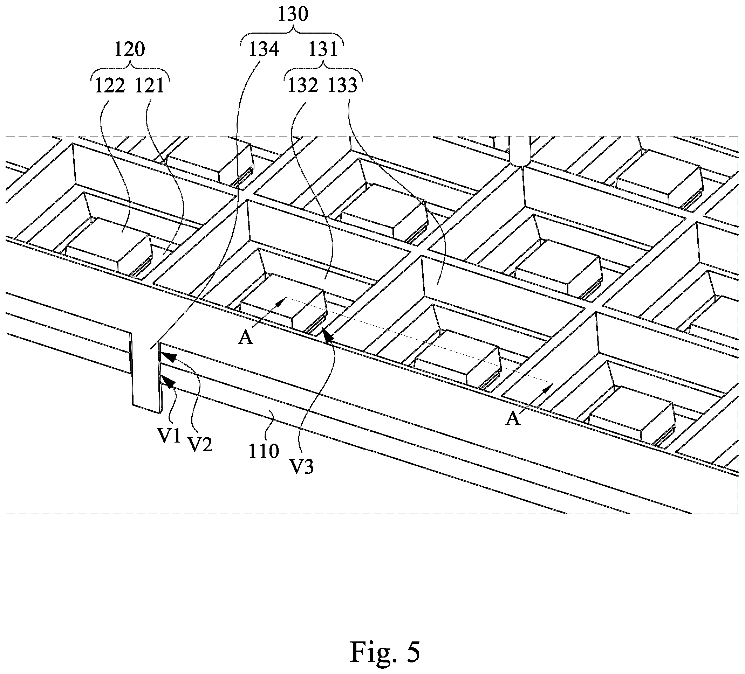

Reference is made to Fig. 5. Fig. 5 is a schematic view of assembly of the cavity reflector 130 of Fig. 4. In this embodiment, as shown in Fig. 5, the back plate 110 has a plurality of first through holes V1. The second plate 121 of the light board 120 has a plurality of second through holes V2. The first through holes V1 are substantially aligned with the second through holes V2. Each of the first through holes V1 and a corresponding one of the second through holes V2 together define a penetrating hole. During assembly, each of the deformable shafts 134 of the cavity reflector 130 sequentially penetrates through a corresponding one of the second through holes V2 of the second plate 121 and a corresponding one of the first through holes V1 of the back plate 110, such that the second plate 121 of the light board 120 is clamped by the first plate 131 of the cavity reflector 130 and the back plate 110.

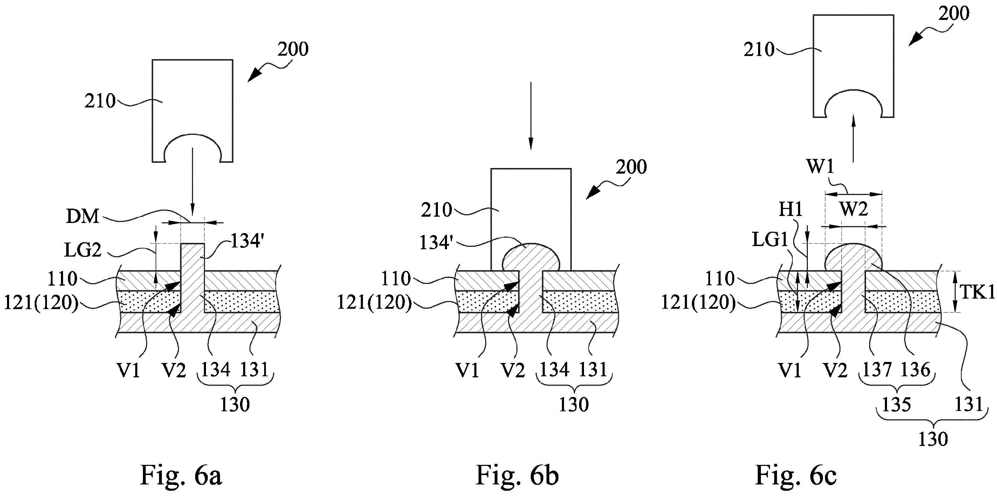

Reference is made to Figs. 6a-6c. Figs. 6a-6c are schematic views showing the heat-melting process of the deformable shaft 134 of Fig. 4. In practical applications, the deformable shaft 134 is a hot-melt adhesive shaft. As shown in Fig. 6a, before a heat-melting fixture 200 abuts against the deformable shaft 134, the deformable shaft 134 is exposed outside the back plate 110 to define a protruding section 134'. The protruding section 134' has a length LG2, while the deformable shaft 134 has a diameter DM. In this embodiment, a range of the ratio of the length LG2 to the diameter DM is between 1.3 and 1.5. For example, a range of the diameter DM is between 1.4 mm and 1.6 mm.

Afterwards, as shown in Fig. 6b, the heating cap 210 of the heat-melting fixture 200 abuts against the protruding section 134' of the deformable shaft 134. The heating cap 210 then applies heat and pressure to deform the protruding section 134'.

Afterwards, as shown in Fig. 6c, after the protruding section 134' is shaped and cools, the heating cap 210 of the heat-melting fixture 200 is withdrawn from relative to the back plate 110, and the heat-melting process is completed. At this point, the protruding section 134' is formed into a head 136, and the deformable shaft 134 is formed to be a fastener 135. In other words, the fastener 135 is practically a deformable fastener, which is formed from the deformable shaft (i.e., the hot-melt adhesive shaft) 134 through the heat-melting process. To be specific, as shown in Fig. 6c, the fastener 135 includes the head 136 and a shaft 137. The head 136 abuts a side of the back plate 110 away from the first plate 131 of the cavity reflector 130. The shaft 137 is connected between the first plate 131 and the head 136.

Furthermore, as shown in Fig. 6c, the head 136 of the fastener 135 has a first width W1, while the shaft 137 has a second width W2, and the second width W2 is equal to the diameter DM mentioned above. In this embodiment, the first width W1 of the head 136 is larger than the second width W2 of the shaft 137. Thus, the head 136 can effectively restrain movement of the back plate 110.

In practical applications, as shown in Fig. 6c, the head 136 has a first height H1 relative to the back plate 110. There is a first ratio of the first height H1 to the second width W2 (i.e., the diameter DM mentioned above), and a range of the first ratio is between 0.5 and 0.6. Moreover, there is a second ratio of the first width W1 of the head 136 to the second width W2, and a range of the second ratio is between 1.9 and 2.1.

In addition, as shown in Fig. 6c, the second plate 121 of the light board 120 and the back plate 110 collectively define a first thickness TK1, while the shaft 137 has a length LG1. In this embodiment, the length LG1 is equal to the first thickness TK1. Thus, the light board 120 and the back plate 110 are able to be securely clamped between the first plate 131 of the cavity reflector 130 and the head 136.

Furthermore, since the fasteners 135 of the cavity reflector 130 are arranged on the first plate 131, the fasteners 135 and the first plate 131 can provide clamping forces to the light board 120 and the back plate 110 at different positions. Therefore, the condition of any partial detachment or displacement occurred between the cavity reflector 130 and the light board 120 can be effectively avoided. In this way, the issue of abnormal noise caused by collisions between the cavity reflector 130 and the light board 120 due to any partial detachment or displacement while the vehicle is moving, can be mitigated. Hence, the performance and reliability of the backlight module 100 can be maintained.

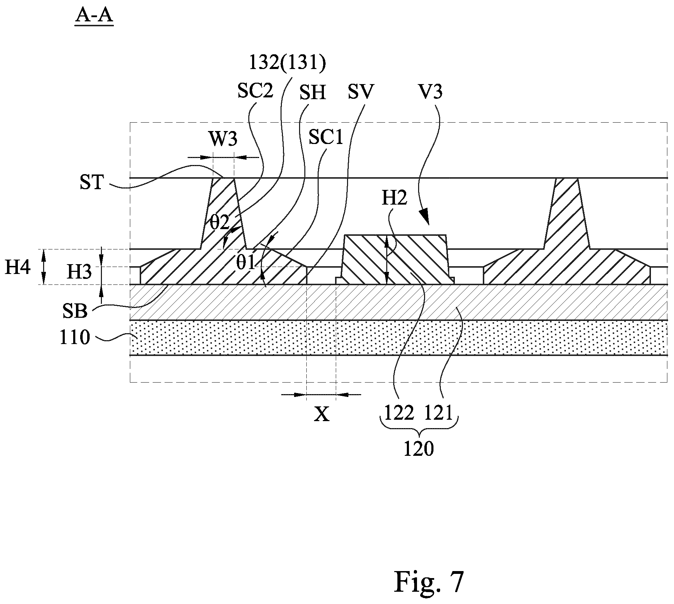

Reference is made to Fig. 7. Fig. 7 is a sectional view along the sectional line A-A of Fig. 5. In this embodiment, as shown in Fig. 7, each wall 132 of the first plate 131 includes a bottom surface SB, a top surface ST, a vertical surface SV, a first inclined surface SC1, a horizontal surface SH and a second inclined surface SC2. The bottom surface SB abuts against the second plate 121. The top surface ST is spaced apart from the second plate 121 and parallel to the bottom surface SB. The vertical surface SV is vertically connected with the bottom surface SB. The first inclined surface SC1 is connected with the vertical surface SV and inclined at a first angle θ1 relative to the bottom surface SB. The first angle θ1 falls within a range between 60 degrees and 70 degrees. The horizontal surface SH is connected with the first inclined surface SC1 and parallel to the bottom surface SB. The second inclined surface SC2 is connected between the horizontal surface SH and the top surface ST. The second inclined surface SC2 is inclined at a second angle θ2 relative to the bottom surface SB. The second angle θ2 falls within a range between 75 degrees and 85 degrees.

To be specific, as shown in Fig. 7, each of the light sources 122 has a second height H2, and the second height H2 falls within a range between 1.3 mm and 1.5 mm. The vertical surface SV has a third height H3 relative to the bottom surface SB, and the third height H3 falls within a range between 0.4 mm and 0.6 mm. The horizontal surface SH has a fourth height H4 relative to the bottom surface SB, and the fourth height H4 falls within a range between 0.9 mm and 1.1 mm. The vertical surface SV and a corresponding one of the light sources 122 are spaced apart from each other by a distance X, and the distance X falls within a range between 0.9 mm and 1.1 mm.

Moreover, as shown in Fig. 7, the top surface ST has a third width W3. In this embodiment, the third width W3 falls within a range between 0.5 mm and 0.7 mm, in combination with the range of the first angle θ1 (i.e., between 60 degrees and 70 degrees), the range of the second angle θ2 (i.e., between 75 degrees and 85 degrees), the range of the third height H3 (i.e., between 0.4 mm and 0.6 mm), the range of the fourth height H4 (i.e., between 0.9 mm and 1.1 mm), the range of the second height H2 (i.e., between 1.3 mm and 1.5 mm) and the range of the distance X (i.e., between 0.9 mm and 1.1 mm), the design prevents shadow formation on the top surface ST.

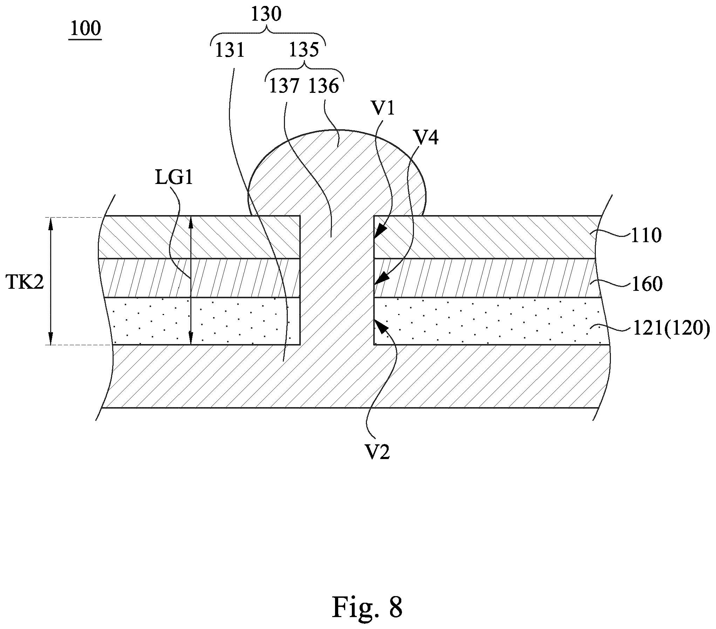

Reference is made to Fig. 8. Fig. 8 is a partial cross-sectional view of a backlight module 100 according to another embodiment of the present disclosure. In this embodiment, as shown in Fig. 8, the backlight module 100 further includes a thermal pad 160. The thermal pad 160 is sandwiched between the second plate 121 of the light board 120 and the back plate 110. The thermal pad 160 has a plurality of fourth through holes V4. The fourth through holes V4 are aligned with the first through holes V1 and the second through holes V2, allowing the shaft 137 to pass through. Moreover, the second plate 121, the thermal pad 160 and the back plate 110 collectively define a second thickness TK2, and the length LG1 of the shaft is equal to the second thickness TK2.

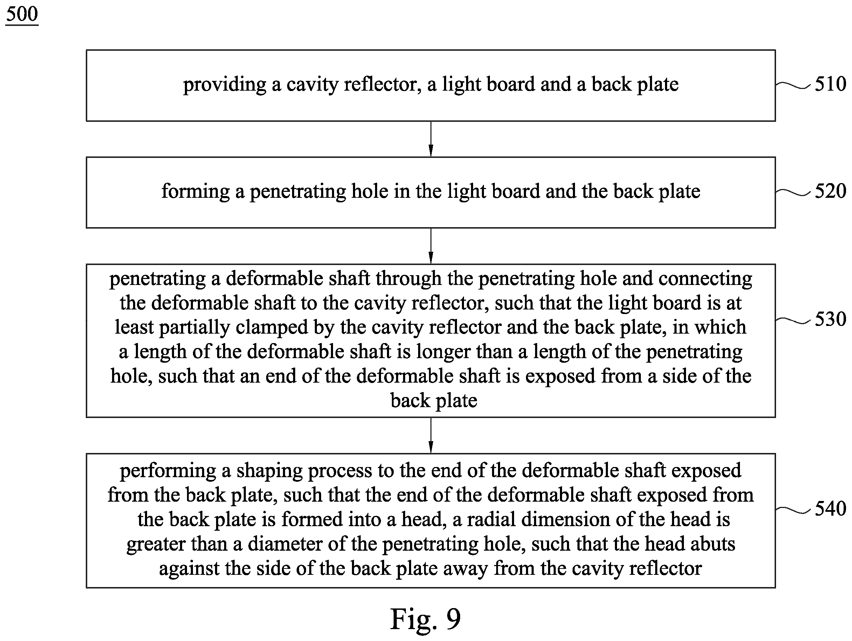

Reference is made to Fig. 9. Fig. 9 is a flow chart of a method 500 for manufacturing backlight module according to an embodiment of the present disclosure. In addition to the backlight module 100 as mentioned above, another aspect of the present disclosure provides a method 500 for manufacturing a backlight module. As shown in Fig. 9, the method 500 for manufacturing backlight module includes the following steps. It should be understood that, in some embodiments, the order of steps mentioned below can be changed according to actual requirements, and may even be performed concurrently or partially concurrently, unless their sequence is explicitly specified:
Step 510: providing the cavity reflector 130, the light board 120 and the back plate 110.

Step 520: forming the penetrating hole in the light board 120 and the back plate 110. The penetrating hole is formed by aligning the first through hole V1 and the corresponding second through hole V2 communicated with each other as mentioned above.

Step 530: penetrating the deformable shaft 134 through the penetrating hole and connecting the deformable shaft 134 to the cavity reflector 130, so that the light board 120 is at least partially clamped by the cavity reflector 130 and the back plate 110. The length of the deformable shaft 134 is longer than the length of the penetrating hole, such that an end of the deformable shaft 134 is exposed from a side of the back plate 110. The portion of the deformable shaft 134 exposed from the side of the back plate 110 is the protruding section 134' mentioned above.

Step 540: performing a shaping process on the end of the deformable shaft 134 exposed from the back plate 110, such that the end of the deformable shaft 134 exposed from the back plate 110 is formed into a head 136. The radial dimension (i.e., the first width W1 mentioned above) of the head 136 is greater than a diameter (equal to the second width W2 mentioned above) of the penetrating hole, such that the head 136 abuts against the side of the back plate 110 away from the cavity reflector 130.

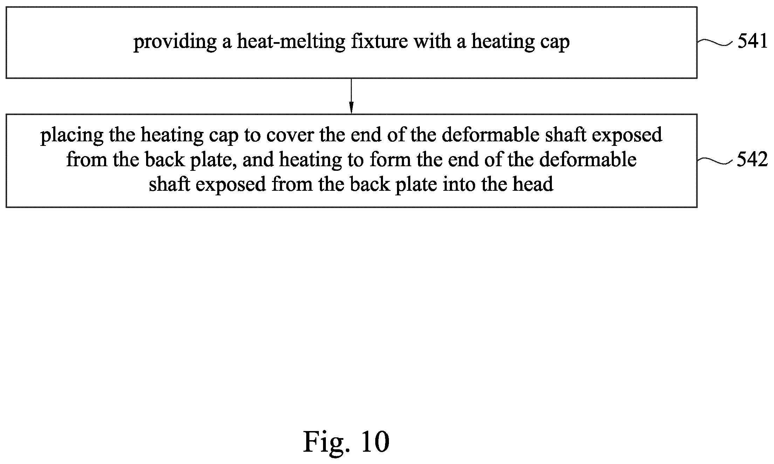

Reference is made to Fig. 10. Fig. 10 is a flow chart of the shaping process of Fig. 9. Specifically, the deformable shaft 134 is a hot-melt adhesive shaft. In this case, as shown in Fig. 10, the shaping process at least includes the following steps:
Step 541: providing the heat-melting fixture 200 with the heating cap 210.

Step 542: placing the heating cap 210 to cover the end of the hot-melt adhesive shaft exposed from the back plate 110, and heating to form the end of the hot-melt adhesive shaft exposed from the back plate 110 into the head 136.

In conclusion, the aforementioned embodiments of the present disclosure have at least the following advantages: since the fasteners of the cavity reflector are distributed on the first plate, the fasteners and the first plate can provide clamping forces to the light board and the back plate at different positions. Therefore, the condition of any partial detachment or displacement occurred between the cavity reflector and the light board can be effectively avoided. Thus, the issue of abnormal noise caused by collisions between the cavity reflector and the light board, due to any partial detachment or displacement while the vehicle is moving, can be mitigated. Hence, the performance and reliability of the backlight module can be maintained.

## Claims

1. A backlight module (100) of a display device (300), **characterized in that**, comprising:
a back plate (110) having a plurality of first through holes (V1);
a light board (120) having a plurality of second through holes (V2) correspondingly aligned with the first through holes (V1); and
a cavity reflector (130) disposed on a side of the light board (120) away from the back plate (110), the cavity reflector (130) comprising:
a first plate (131), the light board (120) being at least partially clamped by the first plate (131) and the back plate (110); and
a plurality of fasteners (135) arranged on the first plate (131), each of the fasteners (135) comprising:
a head (136) abutting a side of the back plate (110) away from the first plate (131); and
a shaft (137) connected between the first plate (131) and the head (136), the shaft (137) extending through a corresponding one of the first through holes (V1) and a corresponding one of the second through holes (V2).

2. The backlight module (100) of claim 1, **characterized in that**, the fasteners (135) are hot-melt adhesive shafts.

3. The backlight module (100) of claim 1, **characterized in that**, the light board (120) comprises a second plate (121) and a plurality of light sources (122), the second plate (121) has the second through holes (V2), the light sources (122) are disposed on the second plate (121), the second plate (121) is disposed between the first plate (131) and the back plate (110), the first plate (131) has a plurality of third through holes (V3), the light sources (122) are respectively located in the third through holes (V3).

4. The backlight module (100) of claim 3, **characterized in that**, the first plate (131) comprises:
a plurality of walls (132) respectively extending along an extension direction (DE), each of the third through holes (V3) is defined between adjacent two of the walls (132) along an alignment direction (DA), the extension direction (DE) is orthogonal to the alignment direction (DA), each of the walls (132) comprises:
a bottom surface (SB) abutting against the second plate (121);
a top surface (ST) being away from the second plate (121) and parallel with the bottom surface (SB);
at least one vertical surface (SV) vertically connected with the bottom surface (SB);
at least one first inclined surface (SC1) connected with the vertical surface (SV) and inclined at a first angle (θ1) relative to the bottom surface (SB), a range of the first angle (θ1) is between 60 degrees and 70 degrees;
at least one horizontal surface (SH) connected with the first inclined surface (SC1) and being parallel with the bottom surface (SB); and
at least one second inclined surface (SC2) connected between the horizontal surface (SH) and the top surface (ST) and inclined at a second angle (θ2) relative to the bottom surface (SB), a range of the second angle (82) is between 75 degrees and 85 degrees; and
a plurality of connecting portions (133), each of the connecting portions (133) is connected between adjacent two of the walls (132) along the extension direction (DE), and connected between adjacent two of the walls (132) along the alignment direction (DA).

5. The backlight module (100) of claim 3, **characterized in that**, the second plate (121) and the back plate (110) collectively define a first thickness (TK1), the shaft (137) has a length (LG1), the length (LG1) is equal to the first thickness (TK1).

6. The backlight module (100) of claim 3, **characterized in that**, further comprising:
a thermal pad (160) disposed between the second plate (121) and the back plate (110), the thermal pad (160) having a plurality of fourth through holes (V4) aligned with the first through holes (V1) and the second through holes (V2).

7. The backlight module (100) of claim 6, **characterized in that**, the second plate (121), the thermal pad (160) and the back plate (110) collectively define a second thickness (TK2), the shaft (137) has a length (LG1), the length (LG1) is equal to the second thickness (TK2).

8. An automotive display (300), **characterized in that**, comprising:
a display panel (400);
the backlight module (100) of claim 1, the backlight module (100) being disposed under the display panel (400) to provide a backlight source to the display panel (400);
at least one optical film (140) disposed on a side of the cavity reflector (130) away from the light board (120); and
a frame (150) connected with the back plate (110) and surrounding the optical film (140), the cavity reflector (130) and the light board (120).

9. A method (500) for manufacturing a backlight module, **characterized in that**, comprising:
providing a cavity reflector (130), a light board (120) and a back plate (110), wherein the back plate (110) has a plurality of first through holes (V1), the light board (120) has a plurality of second through holes (V2), and the cavity reflector (130) has a plurality of deformable shafts (135);
disposing the light board (120) on the back plate (110) and correspondingly aligning the second through holes (V2) with the first through holes (V1);
disposing the cavity reflector (130) on the light board (120) and inserting the deformable shafts (135) into the first through holes (V1) and the second through holes (V2), such that the light board (120) is at least partially sandwiched between the cavity reflector (130) and the back plate (110), and the deformable shafts (135) protrude the first through holes (V1) and are exposed from a side of the back plate (110) away from the cavity reflector (130); and
performing a shaping process on the deformable shafts (135) exposed from the side of the back plate (110) away from the cavity reflector (130), such that protruding portions of the deformable shafts (135) exposed from the back plate (110) are formed into heads (136), a radial dimension of the heads (136) is greater than a diameter of the first through holes (V1), and the heads (136) abut against the side of the back plate (110) away from the cavity reflector (130).

10. The method (500) of claim 9, **characterized in that**, the shaping process comprises:
providing a fixture (200) having a heating cap (210); and
placing the heating cap (210) to cover the protruding portions of the deformable shafts (134) exposed from the back plate (110), and heating the heating cap (210) to form the protruding portions of the deformable shafts (134) exposed from the back plate (110) into the heads (136).
